# EUROPEAN PATENT SPECIFICATION

(11) **EP 1 955 427 B1**
(45) Date of publication and mention of the grant of the patent: **19.01.2011**
(21) Application number: 06819840.7
(22) Date of filing: 29.11.2006
(51) Int. Cl.: H02K 3/487, H02K 5/173, H02K 1/14

(54) **AN ELECTRIC MOTOR**
ELEKTROMOTOR
MOTEUR ELECTRIQUE

(30) Priority: 30.11.2005 TR 200504781
(43) Date of publication of application: 13.08.2008
(73) Proprietor: Arçelik Anonim Sirketi, 34950 Istanbul (TR)
(72) Inventor: BAHADIR, Aydin, 34950 Istanbul (TR); AYVAZOGLU, Cumhur, 34950 Istanbul (TR)
(86) International application number: PCT/EP2006/069068
(87) International publication number: WO 2007/063076

(56) References cited:
- EP-A1- 0 307 663
- FR-A1- 2 602 103
- US-A- 5 043 616

## Description

This invention relates to an electric motor comprising a stator and a rotor moving inside the said stator.

Electric motors, for instance universal motors utilized in household appliances, comprise a stator forming the stationary portion and a rotor moving inside the mentioned stator, wherein, the rotor shaft is supported with the rotor bearings inside the motor covers located at the front and back of the stator, preferably with ball bearings. The bearing distance between the two ends of the rotor shaft is determined by the size of the covers mounted leaning against the front and back side of the stator stack and by the height of the stator stack. The stator stack comprises laminations, and these laminations are positioned on top of each other bending considerably in the longitudinal direction of the stator stack. That bending of the stator stack causes an end-play which allows the rotor to move in the axial direction to a certain distance. As a result of the pressure applied by the bolts used during the assembly, the height of the stator decreases which in turn makes it difficult to stabilize the bearing distance between the two ends of the rotor. On the other hand, the fact that the thickness of the lamination plate is variable causes complications concerning the parallel form of the stator stack and thus complications concerning bearing. These facts related with the stator stack, cause variations in bearing friction loads in motors and vibration and noise problems. In order to be able to eliminate the afore-mentioned problems, casings, named as sleeve, shell, etc whereby it is achieved to keep the distance between the points where the rotor is supported constant and covering the rotor or the stator are utilized, wherein the mentioned elements should be manufactured having a considerably small wall thickness since they have to pass through the considerably narrow air gap between the rotor and the stator, said air gap having very critical dimensions, and negatively affect the magnetic flux in the mentioned air gap.

In the United States Patent Document no. US 3733504, a description is given of a synchronous motor wherein a magnetic sleeve is positioned inside the gap between the stator and the rotor. The sleeve is fastened to the stator from the inside so as to close the portions of the winding slots opening into the rotor housing and supports the rotor by carrying the ball bearings to which the rotor is attached.

In the United States Patent Document no. US 4482829, a description is given of an embodiment wherein, in a brushless micro electric motor, the rotor comprising several magnets is located inside a rotor casing, a stator comprising field windings is positioned around the mentioned rotor casing and inside a stator casing.

In the United States Patent Document no. US 4999533, a description is given of a metal pipe which is positioned in the air gap between the rotor and the stator in an electric motor, wherein the metal pipe is in form of a pipe with narrow walls and protects the rotor and supports the rotor bearings. The mentioned metal pipe is press-fitted to the inner surface of the stator wherein the opening sections of the stator winding slots are left open such that winding wire can pass therethrough.

The aim of the present invention is the realization of an electric motor comprising a sleeve positioned between the rotor and the stator, whereby the distance between the rotor bearings is kept constant.

The electric motor realized in order to attain the aim of the present invention is described in the claims.

The electric motor in accordance with the present invention comprises a stator and a rotor moving inside the mentioned stator and the pole projections at the surface of the stator facing the rotor. Furthermore, at the mentioned surface of the stator facing the rotor, there are also provided stator slots where the windings are positioned, an air gap between the outer surface of the rotor and said pole projections and, a slot aperture located between the stator slots bordered by the pole projections. In the electric motor, a sleeve having a rigid structure is positioned between the rotor and the stator wherein the mentioned sleeve is used to keep the distance between the ball bearing housings supporting the rotor inside the motor covers constant by being attached to the front and back motor covers. The portions of the sleeve located at the front and at the back of the stator are joined with a traverse passing through the stator stack wherein said traverse passes through a slot aperture positioned between the winding slots so as not to intervene the air gap between the rotor and stator and does not affect the performance. The traverse closes the slot apertures and supports the windings inside the slots, said traverse contributing also to reducing the noise caused by the mentioned slot apertures. By producing the sleeve as a single piece with the front or back motor cover, it is also achieved to facilitate the manufacturing and assembling of said sleeve.

The electric motor realized in order to attain the aim of the present invention is illustrated in the attached figures where:

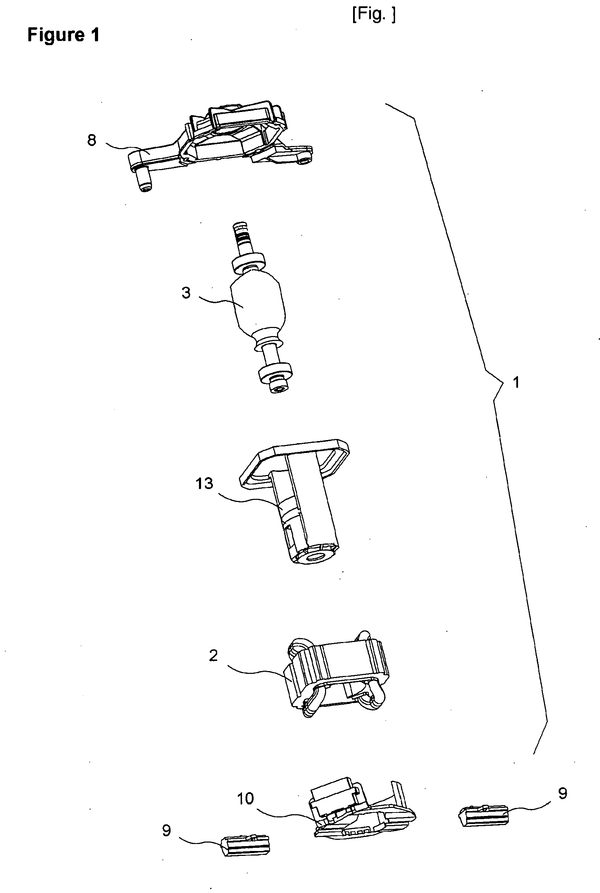

Fig.1 - is an exploded view of an electric motor.

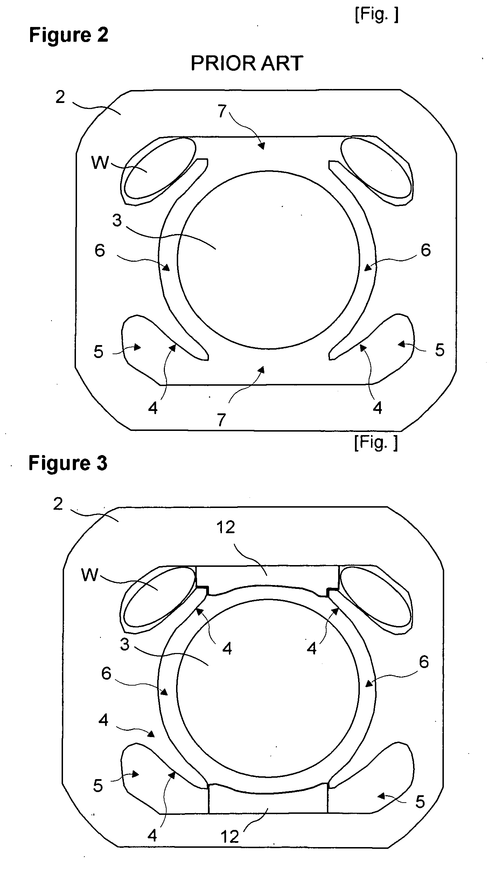

Fig.2 - is a schematic representation of a rotor and stator, in the state of the art.

Fig.3 - is a schematic representation of a stator, a rotor and a sleeve.

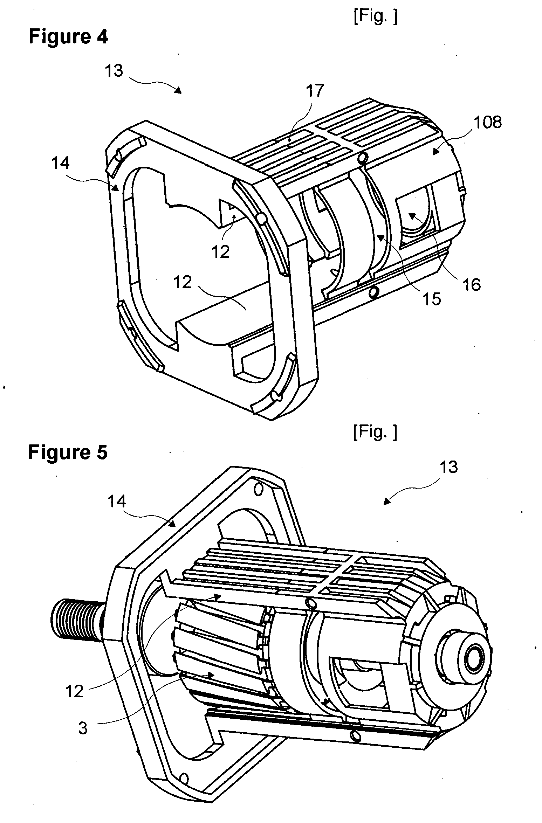

Fig.4 - is a perspective view of a sleeve.

Fig.5 - is a perspective view of a sleeve and a rotor positioned thereinside.

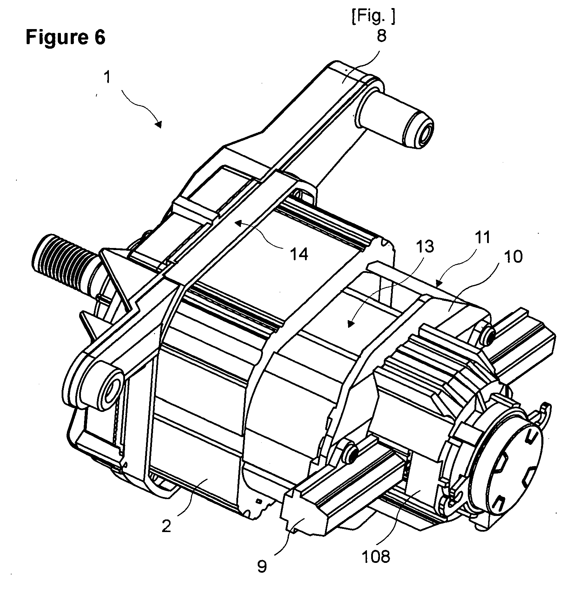

Fig.6 - is a perspective view of an electric motor.

Elements shown in figures are numbered as follows:
- 1.: Electric motor
- 2.: Stator
- 3.: Rotor
- 4.: Pole projection
- 5.: Winding slot
- 6.: Air gap
- 7.: Slot aperture

- 8, 108.: Motor cover
- 9.: Brush
- 10.: Bracket
- 11.: Winding casing
- 12.: Traverse
- 13.: Sleeve
- 14.: Frame
- 15.: Bracket housing
- 16.: Brush housing
- 17.: Cut-out

The electric motor (1) comprises a stator (2) generating a magnetic field via the supplied voltage, a rotor (3) moving inside the mentioned stator (2), more than one pole projections (4) located on the surface of the stator (2) facing the rotor (3), more than one winding slots (5) where the windings (W) of the stator (2) is positioned thereinside and which is bordered by the inner surface of the stator (2) and the pole projections (4), an air gap (6) between the pole projections (4) and the outer surface of the rotor (3), said air gap affecting the performance, a slot aperture (7) that is located on the inner surface of the stator (2) at the area between the winding slots (5), a front motor cover (8) and a rear motor cover (108) having ball bearings or sliding bearings whereby the rotor (3) shaft is supported at its two ends and providing the electric motor (1) is mounted to the household appliance and the electric motor (1) is preserved

The electric motor (1) in accordance with the present invention further comprises a sleeve (13) which is positioned between the rotor (3) and the stator (2), covering the stator (2) at its inner surface, wherein the mentioned sleeve (13) is used to establish the connection between the front and rear motor covers (8, 108) and to keep the distance between the rotor (3) bearings inside the motor covers (8, 108) constant.

The sleeve (13) incorporates one or more traverses (12) which extend through the Stator (2) stack without entering the air gap (6) between the rotor (3) and the pole projections (4) and which pass through the slot apertures (7) between the pole projections (7).

In one embodiment of the present invention, the traverse (12) leans against the pole projections (4) positioned at the sides of the slot apertures (7) and fills the slot aperture (7). Thus, after the assembly, the traverse (12) is prevented from moving inside the slot aperture (7).

In one embodiment of the present invention, the traverse (12) leans against the windings (W) inside the winding slots (5), thus supporting the windings (W) ensuring that they do not get out of the winding slots (5).

In one embodiment of the present invention, the surface of the traverse (12) at the inner side facing the rotor (3) is in a convex form in such a manner surrounding the outer surface of the rotor (3) without being in contact with the rotor (3). In this embodiment, between the inner surface of the traverse (12) and the outer surface of the rotor (3), there is provided a gap formed as an extension of the air gap (6), contributing the performance of the electric motor (1).

In another embodiment of the present invention, the traverse (12) further incorporates more than one cut-outs (17) contributing the noise level reduction and providing weight reduction.

The electric motor (1) also incorporates a frame (14) to which the front and rear motor cover (8, 108) is attached, two brushes (9) transferring current to the rotor (3), a bracket (10) to which the mentioned brushes are connected, a bracket housing (15) located above the sleeve (13), carrying the bracket (10) to which the brushes (9) are mounted, two brush housing (16) through which the brushes (9) passes.

In one embodiment of the present invention, the electric motor (1) incorporates a winding casing (11) which leans against the stator (2) extending from the bracket (10) towards the stator (2) stack, prevents the stator (2) attached to the sleeve (13) from sliding and covers the surface of the stator (2) windings (W).

While assembling the elements constituting the electric motor (1), the rotor (3) is supported inside the front motor cover (8) wherein said front motor cover (8) is mounted to the stator sleeve (13) by being fastened to the frame (14) by means of fixing elements. The rotor (3) is supported between two motor covers (8, 108) such that the distance between the bearings does not change, said rotor (3) fitting to the bearing in the motor front cover (8) and to the bearings in the rear motor cover (108), the stator sleeve (13) being conjoined at the back side thereof, being manufactured in a single piece with the mentioned rear motor cover (108). The stator (2) leans against the frame (14) by being fitted onto the sleeve (13) such that the traverses (12) fit to the slot apertures (7). After the stator (2) fit onto the sleeve (13), the bracket (10) is attached to the bracket housing (15) on the sleeve (13). The windings (W) are covered as the winding casing (11) leans against the stator (2) and the position of the stator (2) stack on the sleeve (13) is stabilized by squeezing said stator (2) stack between the frame (14) and the winding casing (11). The assembly of the electric motor (1) is finished as the bracket (10) with brushes (9) mounted thereon passes through the brush housings (16).

The sleeve (13) is manufactured from a non-magnetic material so as not to disturb the magnetic field generated between the stator (2) and the rotor (3), preferably from aluminum or hard plastic

In one embodiment of the present invention, the sleeve (13) is manufactured as a single piece with the front motor cover (8) or the rear motor cover (108) wherein it is achieved to simplify the assembly process and to improve the cooling of the electric motor (1).

In the embodiment in accordance with the present invention, the traverse (12) connecting the back and front sections of the sleeve (13) passes through the slot aperture (7) which does not affect the performance, instead of passing through the narrow air gap (6) located between the pole projections (4) and the rotor (3) and having a considerable effect on the performance of the electric motor (1). Thereby, the traverse (12) also helps reducing the noise level of the electric motor (1) by closing the afore-mentioned slot aperture (7) which causes the noise level to increase during the rotary motion of the rotor (3) and supports the windings (W) inside the winding slots (5) to prevent disengagement thereof.

In the embodiment according to the present invention, since the variation in the stator stack (2) height does not affect the distance between the bearings on the motor covers (8, 108) supporting the rotor (3), it is ensured that the rotor (3) is axially supported approximately without any gap, eliminating vibration and noise problems, torque variation problems in connection elements and such problems as rotor (3) eccentricity depending on defects concerning the parallel and perpendicular structure of the stator (2) stack. Moreover, since the traverses (12) on the sleeve (13) close the slot aperture (7) eliminating the discontinuity of the stator (2) pole projections (4), it is accomplished to reduce the noise. Furthermore, since the sleeve (13) transfers heat from a considerably heated portion of the stator (2) stack by conduction, it also functions as a cooling means.

## Claims

1. An electric motor (1) comprising; a stator (2) generating a magnetic field, a rotor (3) moving inside the mentioned stator (2), more than one pole projection (4) located on the surface of the stator (2) facing the rotor (3), more than one winding slot (5) inside which the windings (W) of the stator (2) is positioned, an air gap (6) between the pole projections (4) and the outer surface of the rotor (3) and, a slot aperture (7) that is located on the inner surface of the stator (2) at the area between the winding slots (5), and **characterized by** a sleeve (13) comprising one or more traverses (12) extending through the stator (2) stack without entering the air gap (6) between the rotor (3) and the pole projections (4) and passing through the slot apertures (7) between the pole projections (7), positioned between the rotor (3) and the stator (2), covering the stator (2) at its inner surface, wherein the mentioned sleeve (13) is used to establish the connection between the front and rear motor covers (8, 108) and to keep the distance between the rotor (3) bearings inside the motor covers (8, 108) constant.

2. An electric motor (1) as described in Claim 1, **characterized by** a sleeve (13) comprising a traverse (12) which leans against the pole projections (4) positioned at the sides of the slot apertures (7) and fills the slot aperture (7).

3. An electric motor (1) as described in Claims 1 or 2, **characterized by** a sleeve (13) comprising a traverse (12) which supports the windings (W) inside the winding slots (5) to prevent disengagement of the mentioned windings (W) from the winding slots (5).

4. An electric motor (1) as described in any of the above Claims, **characterized by** a sleeve (13) comprising a traverse (12) which has the inner surface facing the rotor (3) is in a convex form in such a manner surrounding the outer surface of the rotor (3) without being in contact with the rotor (3).

5. An electric motor (1) as described in any of the above Claims, **characterized by** a sleeve (13) comprising a traverse (12) which has more than one cut-out (17) contributing noise reduction and providing weight reduction.

6. An electric motor (1) as described in any of the above Claims, **characterized by** a frame (14) to which the front and rear motor cover (8, 108) is attached, two brushes (9) transferring current to the rotor (3), a bracket (10) to which the mentioned brushes are connected, a bracket housing (15) located above the sleeve (13) and carrying the bracket (10) to which the brushes (9) are mounted and, two brush housing (16) through which the brushes (9) pass.

7. An electric motor (1) as described in Claim 6, **characterized by** a winding casing (11) which leans against the stator (2) extending from the bracket (10) towards the stator (2) and covers the windings (W) of the stator (2).

8. An electric motor (1) as described in any of the above Claims, **characterized by** a sleeve (13) which is manufactured as a single piece with the front motor cover (8) or the rear motor cover (108).

## Patentansprüche

1. Elektromotor (1), umfassend einen Stator (2), der ein Magnetfeld erzeugt, einen Rotor (3), der sich in dem Stator (2) bewegt, mehrere Polvorsprünge (4), die an der Fläche des Stators (2) angeordnet sind und dem Rotor (3) zugewandt sind, mehrere Wicklungsschlitze (5), in denen die Wicklungen (W) des Stators (2) angeordnet sind, einen Luftspalt (6) zwischen den Polvorsprüngen (4) und der Außenfläche des Rotors (3) angeordnet sind, und eine Schlitzöffnung (7), die an der Innenfläche des Stators (2) im Bereich zwischen den Wicklungsschlitzen (5) angeordnet ist, und **gekennzeichnet durch** eine Hülse (13) mit einer oder mehreren Brücken (12), die sich **durch** das Statorpaket (2) erstreckt, ohne in den Luftspalt (6) zwischen dem Rotor (3) und den Polvorsprüngen (4) einzutreten, und **durch** die Schlitzöffnungen (7) zwischen den Polvorsprüngen (7) tritt, die zwischen dem Rotor (3) und dem Stator (2) angeordnet sind, und den Stator (2) an seiner Innenfläche abdeckt, wobei die Hülse (13) dazu dient, die Verbindung zwischen der vorderen und hinteren Motorabdeckung (8, 108) herzustellen und den Abstand zwischen den Lagern des Rotors (3) in den Motorabdeckungen (8, 108) konstant zu halten.

2. Elektromotor (1) nach Anspruch 1, **gekennzeichnet durch** eine Hülse (13), die eine Brücke (12) umfasst, die an die Polvorsprünge (4) angelehnt ist, die an den Seiten der Schlitzöffnung (7) angeordnet sind, und die Schlitzöffnung (7) ausfüllt.

3. Elektromotor (1) nach Anspruch 1 oder 2, **gekennzeichnet durch** eine Hülse (13), die eine Brücke (12) umfasst, die die Wicklungen (W) in den Wicklungsschlitzen (5) stützen, um ein Lösen der Wicklungen (W) aus den Wicklungsschlitzen (5) zu verhindern.

4. Elektromotor (1) nach einem der vorangehenden Ansprüche, **gekennzeichnet durch** eine Hülse (13), die eine Brücke (12) umfasst, deren Innenfläche, die dem Rotor (3) zugewandt ist, eine konvexe Form aufweist, derart, dass sie die Außenfläche des Rotors (3) umgibt, ohne in Kontakt mit dem Rotor (3) zu stehen.

5. Elektromotor (1) nach einem der vorangehenden Ansprüche, **gekennzeichnet durch** eine Hülse (13), die eine Brücke (12) umfasst, die mehrere Aussparungen (17) aufweist, die zur Geräuschreduzierung und Gewichtsreduzierung beitragen.

6. Elektromotor (1) nach einem der vorangehenden Ansprüche, **gekennzeichnet durch** einen Rahmen (14), an dem die vordere und hintere Motorabdeckung (8, 108) angebracht sind, zwei Bürsten (9), die Strom an den Rotor (3) übertragen, eine Halterung (10), mit der die Bürsten verbunden sind, ein Halterungsgehäuse (15), das über der Hülse (13) angeordnet ist und die Halterung (10) trägt, an der die Bürsten (9) montiert sind, und zwei Bürstengehäuse (16), **durch** die die Bürsten (9) hindurchtreten.

7. Elektromotor (1) nach Anspruch 6, **gekennzeichnet durch** ein Wicklungsgehäuse (11), das am Stator (2) lehnt und sich von der Halterung (10) zum Stator (2) erstreckt und die Wicklungen des Stators (2) abdeckt.

8. Elektromotor (1) nach einem der vorangehenden Ansprüche, **gekennzeichnet durch** eine Hülse (13), die einstückig mit der vorderen Motorabdeckung (8) und der hinteren Motorabdeckung (108) ausgebildet ist.

## Revendications

1. Un moteur électrique (1) comprenant un stator (2) générant un champ magnétique, un rotor (3) se déplaçant dans le stator mentionné (2), plus d'une projection polaire (4) située sur la surface du rotor (2) face au rotor (3), plus d'une fente d'enroulement (5) dans laquelle les enroulements (W) du stator (2) sont positionnées, un espace d'air (6) entre les projections polaires (4) et la surface extérieure du rotor (3) et, une ouverture de fente (7) qui se trouve sur la surface intérieure du stator (2) à la région entre les fentes d'enroulement (5), et **caractérisé par** une chemise (13) ayant un ou plusieurs ponts (12) s'étendant à travers le paquet de tôles de stator (2) sans entrer dans l'espace d'air (6) entre le rotor (3) et les projections polaires (4) et passer par les ouvertures de fente (7) entre les projections polaires (7), positionnées entre le rotor (3) et le stator (2), couvrant le stator (2) à sa surface interne, où la chemise mentionnée (13) est utilisée pour établir la connexion entre les couvercles avant et arrière de moteur (8, 108) et pour garder la distance entre les paliers de rotor (3) à l'intérieur des couvercles de moteur (8, 108) constant.

2. Un moteur électrique (1) selon la Revendication 1, **caractérisé par** une chemise (13) comprenant un pont (12) qui s'appuie contre les projections polaires (4) positionnées sur les côtés des ouvertures de fente (7) et remplit l'ouverture de fente (7).

3. Un moteur électrique (1) selon la Revendication 1 ou 2, **caractérisé par** une chemise (13) comprenant un pont (12) qui supporte les enroulements (W) dans les fentes d'enroulement (5) pour empêcher le dégagement des enroulements mentionnés (W) des fentes d'enroulement (5).

4. Un moteur électrique (1) selon l'une quelconque des revendications précédentes, **caractérisé par** une chemise (13) comprenant un pont (12) dont la surface intérieure en face de rotor (3) est dans une forme convexe de façon entourant la surface extérieure du rotor (3) sans être en contact avec le rotor (3).

5. Un moteur électrique (1) selon l'une quelconque des revendications précédentes, **caractérisé par** une chemise (13) comprenant un pont (12) qui comporte plus d'un découpage (17) contribuant réduction du bruit et permettant une réduction de poids.

6. Un moteur électrique (1) selon l'une quelconque des revendications précédentes, **caractérisé par** un cadre (14) auquel les couvercles avant et arrière de moteur (8, 108) sont fixés, deux brosses (9) transférant le courant au rotor (3), une équerre (10) auquel les brosses mentionnées sont connectés, un boîtier d'équerre (15) situé au-dessus de la chemise (13) et supportant l'équerre (10) à laquelle les brosses (9) sont montées et, deux boîtiers de brosse (16) à travers lequel les brosses (9) passent.

7. Un moteur électrique (1) selon la Revendication 6, **caractérisé par** un boîtier d'enroulement (11) qui s'appuie contre le stator (2) s'étendant de l'équerre (10) vers le stator (2) et couvre les enroulements du stator (2).

8. Un moteur électrique (1) selon l'une quelconque des revendications précédentes, **caractérisé par** une chemise (13) qui est fabriqué en une seule pièce avec le couvercle avant de moteur (8) et le couvercle arrière de moteur (108).
